# EUROPÄISCHE PATENTANMELDUNG

(11) **EP 4 715 282 A1**
(43) Veröffentlichungstag der Anmeldung: **25.03.2026**
(21) Anmeldenummer: 25203411.1
(22) Anmeldetag: 19.09.2025
(51) Int. Cl.: F24H 1/18, G01K 1/14

(54) **WÄRMESPEICHER UND VERFAHREN ZUR MONTAGE EINES TEMPERATURSENSORS AN EINEM WÄRMESPEICHER**

(30) Priorität: 24.09.2024 DE 102024127520
(71) Anmelder: Vaillant GmbH, 42859 Remscheid NRW (DE)
(72) Erfinder: Ruthenberg, Christian, verstorben (DE); Steinhaus, Niklas, 42897 Remscheid (DE)
(74) Vertreter: Popp, Carsten

(57) **Zusammenfassung**

Vorgeschlagen wird ein Wärmespeicher (1), der zumindest einen Speicherbehälter (2) zur Aufnahme eines Wärmeträgers und eine thermische Isolation (3) des Speicherbehälters (2) umfasst. Dabei weist die thermische Isolation (3) mindestens eine Öffnung (24) auf, in die formschlüssig und/ oder kraftschlüssig ein Halteelement (7) aus einem komprimierbaren Dämmmaterial einbringbar oder eingebracht ist und an und/ oder in dem Halteelement (7) ein Temperatursensor (9) anordenbar oder angeordnet ist, der mit dem Speicherbehälter (2) thermisch koppelbar oder gekoppelt ist und das Halteelement (7) mehrteilig ausgebildet ist und ein außenliegendes Mantelelement (8) und ein innenliegendes Kernelement (27) umfasst, wobei an oder in dem Kernelement (7) der Temperatursensor (9) angeordnet ist und das Kernelement (27) formschlüssig und/oder kraftschlüssig in dem Mantelelement (8) angeordnet ist und das Mantelelement (8) formschlüssig und/oder kraftschlüssig in der Öffnung (24) angeordnet oder anordenbar ist. Zudem wird ein Verfahren zur Montage eines Temperatursensors (9) an einem Wärmespeicher (1) vorgeschlagen. Die Erfindung ermöglicht eine besonders einfache und schnelle Montage eines Temperatursensors (9) an einen Wärmespeicher (1), wobei zudem eine Revision bzw. Austausch des Temperatursensors (9) auf einfache Weise möglich ist.

## Beschreibung

Die Erfindung betrifft einen Wärmespeicher und ein Verfahren zur Montage eines Temperatursensors an einem Wärmespeicher.

Anlagen zur Bereitstellung von Wärme für Warmwasser und/ oder Heizung können Wärmespeicher zur Speicherung von erwärmtem Wasser oder einem anderen (flüssigen) Wärmeträger umfassen. Insbesondere bei der Nutzung erneuerbarer Energien wie Solarthermie können zu unterschiedlichen Zeitpunkten gute Bedingungen für eine Wärmegewinnung und eine Anforderung von Warmwasser vorliegen. Um hier gleichwohl die seitens eines Nutzers angeforderte Menge bzw. Temperatur mittels erneuerbarer Energien erzeugter Wärme abgeben zu können, finden Wärmespeicher Anwendung, die dazu eingerichtet sind, erwärmten Wärmeträger bis zur Nutzung zu speichern. Dabei versteht sich, dass ein Wärmespeicher, häufig in Verbindung mit einer Wärmepumpe, auch zur Speicherung kalten Wärmeträgers zu Kühlzwecken in warmen Jahreszeiten genutzt werden kann.

Derartige Wärmespeicher umfassen in der Regel einen Speicherbehälter zur Aufnahme des Wärmeträgers, der thermisch gegenüber der Umgebung isoliert ist, um Wärmeverluste zu minimieren. Eine hierzu eingesetzte Isolation sollte den Speicherbehälter möglichst dicht umschließen, um eine Bildung von Wärmebrücken und damit verbundene Wärmeverluste zu verhindern. Die Isolation wird zumeist aus bekannten Isolationsmaterialien gebildet, häufig expandierten oder geschäumten Kunststoffen. Es sind aber auch Isolationen aus zu schüttenden Materialien bekannt.

Um eine Einbindung in eine Regelung einer Heizungsanlage zu ermöglichen, ist eine Kenntnis der im Wärmespeicher enthaltenen Energiemenge notwendig. Hierzu können mehrere Temperatursensoren vorgesehen sein, die über die Höhe des Wärmespeichers verteilt angeordnet sind, so dass diese insbesondere Temperaturen der sich ausbildender Temperaturschichten des enthaltenen Wärmeträgers erfassen können.

Die Temperatursensoren müssen dabei thermisch an den im Wärmespeicher enthaltenen Wärmeträger angekoppelt werden. Beispielsweise ist bekannt, die Temperatursensoren in Sensortaschen anzuordnen, wobei die Sensortaschen in einem mit der Behälterwand verschweißten Flansch montiert sind. Diese Lösung ist sehr aufwendig und erzeugt zudem Wärmebrücken, die die Energieeffizienz des Wärmespeichers mindern. So könnte man die Sensortaschen mit Dämmschaum überdecken, um Wärmebrücken zu vermeiden, jedoch würde dies die Zugänglichkeit des Temperatursensors und die Möglichkeit eines Austauschs desselben verhindern.

In der EP 4 180 785 A1 wird ein Verfahren zum Nachrüsten von Temperatursensoren an einem Wärmespeicher vorgeschlagen, bei dem ein Temperatursensor mit einem stöpselartigen Sensorhalter in die Isolation des Wärmespeichers eingebracht wird.

Die AT 523 534 B1 beschreibt eine Temperatur-Erfassungseinheit, die in einer Aufnahmevertiefung in der Innenfläche einer Umhüllungseinheit eines Wärmespeichers angeordnet ist. Nachteilig ist diese Lösung nicht revisionsfähig und auch nur mit hohem Aufwand nachträglich an einem Wärmespeicher zu installieren.

Die US 2004/ 0 065 148 A1 offenbart einen Wärmespeicher, bei dem mindestens ein Temperatursensor mittels eines Gewindes oder einer Dichtungstülle in die Dämmung eingebracht wird. Hierfür kann im Vorfeld ein Loch von außen in die Dämmung gebohrt werden. Bei diesem Verfahren ist eine Revision des Temperatursensors schwierig, da eine mehrmalige Installation des Sensors Wärmebrücken in der Befestigung desselben bewirken kann.

Hiervon ausgehend ist es Aufgabe der Erfindung einen Wärmespeicher sowie ein Verfahren zur Montage eines Temperatursensors an einem Wärmespeicher vorzuschlagen, die die geschilderten Probleme des Standes der Technik zumindest teilweise überwinden. Insbesondere soll der Wärmespeicher sowie das Verfahren eine einfache Montage eines Temperatursensors als auch eine exakte Temperaturmessung an dem Wärmespeicher ermöglichen, und auch die Energieeffizienz des Speichers durch die Implementierung des Temperatursensors nicht mindern.

Zudem soll die Erfindung die Komplexität eines Wärmespeichers nicht erhöhen.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Wärmespeicher bei, der einen Speicherbehälter zur Aufnahme eines Wärmeträgers und eine thermische Isolation des Speicherbehälters umfasst und die Isolation mindestens eine Öffnung aufweist, in die formschlüssig und/ oder kraftschlüssig ein Halteelement aus einem komprimierbaren Dämmmaterial eingebracht oder einbringbar ist und an dem Halteelement ein Temperatursensor anordenbar oder angeordnet ist, der mit dem Speicherbehälter thermisch koppelbar oder gekoppelt ist. Das Halteelement ist mehrteilig ausgebildet und umfasst ein außenliegendes Mantelelement und ein innenliegendes Kernelement, wobei an oder in dem Kernelement der Temperatursensor angeordnet ist. Das Kernelement ist formschlüssig und/oder kraftschlüssig in dem Mantelelement angeordnet und das Mantelelement formschlüssig und/oder kraftschlüssig in der Öffnung angeordnet oder anordenbar.

Bei dem Wärmespeicher handelt es sich um einen Wärmespeicher zur Versorgung eines Gebäudes mit Wärme für Heizung oder Warmwasser. Insofern umfasst der Wärmespeicher einen Speicherbehälter zur Aufnahme eines (flüssigen) Wärmeträgers, beispielsweise Warmwasser. Der Wärmespeicher kann als Pufferspeicher und/ oder Schichtspeicher ausgebildet sein. Der Wärmespeicher kann zur Aufnahme eines Wärmeträgers eines Heizkreises oder zur Aufnahme von erwärmtem oder zu erwärmenden Trink- oder Brauchwasser eingerichtet sein. Er kann einen Wärmetauscher zur Übertragung eines Wärmestromes umfassen, beispielsweise zum Wärmeaustausch mit einem Heizkreis einer Heizungsanlage, einem Kältekreis einer Wärmepumpenanlage und/ oder einer anderen nachhaltigen Wärmequelle. Der Wärmetauscher kann beispielsweise als Rohrschlange ausgeführt sein, die (im montierten bzw. aufgebauten Zustand) in der Regel in einem (geodätisch) unteren Bereich des Warmwasserspeichers angeordnet sein kann.

Der Speicherbehälter kann im Wesentlichen eine Zylinderform mit einer Grundfläche, die im installierten Zustand des Wärmespeichers dem Boden zugewandt ist oder diesen bildet, eine Deckfläche, die im installierten Zustand des Wärmespeichers nach oben gerichtet ist, und eine in Umfangsrichtung verlaufende Behältermantelfläche, die Grundfläche und Deckfläche verbindet, aufweisen. Die Grundfläche und/ oder die Deckfläche kann dabei insbesondere kreisrund oder oval sein. Die Zylinderform kann ein gerader Zylinder sein, insbesondere ein gerader Kreiszylinder. Eine zylindrische Form stellt die häufigste Form eines Wärmespeichers dar, die Erfindung ist jedoch mit Wärmespeichern beliebiger Form, beispielsweise einer Quaderform umsetzbar. Bei dem Wärmespeicher handelt es sich jedoch insbesondere um eine freistehende Einrichtung, die nicht in ein Gehäuse eines Heizgeräts oder eines Klimageräts integriert ist. Der Speicherbehälter kann metallisch ausgeführt sein.

Die thermische Isolation ist außen um den Speicherbehälter anordenbar bzw. angeordnet. Die thermische Isolation des Wärmespeichers kann mit einem entsprechend geeigneten Material gebildet sein. Beispielhaft kann die Isolation stoffschlüssig mit dem Wärmespeicher verbunden sein. Alternativ kann die Isolation auch mehrteilig ausgeführt und/oder mit Befestigungsmitteln am Wärmespeicher befestigt sein. Beispielhaft kann bei einem zylindrischen Behälter eine mehrteilige, geschlossene Isolationsschicht ein Bodenteil, ein Deckelteil und ein oder mehrere Mantelteile umfassen, die miteinander verbunden oder mittels Spannmitteln an dem Speicherbehälter befestigt werden. Dabei kann die thermische Isolation eines oder mehrere der folgenden Isolationsmaterialien aufweisen: einen Schaumstoff, beispielsweise expandiertes Polystyrol (EPS), expandiertes Polypropylen (EPP), textile Materialien, wie Vliesmatten, mineralische Materialien oder auch natürliche Materialien wie Kork oder Hanffasern.

Die thermische Isolation kann auch eine Schüttung eines Dämmmaterials umfassen. Hierzu kann eine den Speicherbehälter zumindest teilweise umschließende Kavität geschaffen werden, die von dem als Schüttgut vorliegenden Material ausgefüllt wird. Die Kavität kann durch eine zu dem Speicherbehälter beabstandete Schale geschaffen werden. Geeignete, als Schüttgut vorliegender Dämmmaterialien können beispielsweise aus folgender Gruppe ausgewählt sein: mineralisches Material (z.B. Perlit), Kunststoff (z.B. nanopröses Polymethylmethacrylat (PMMA)), Aerogel.

Es wird vorgeschlagen, mindestens eine Öffnung in die Isolation einzubringen oder bereitzustellen, in die ein Halteelement formschlüssig und/ oder kraftschlüssig eingebracht werden kann bzw. ist. Insbesondere ist die Öffnung passend für ein vorbestimmtes Halteelement ausgebildet. Das Halteelement ist vorgesehen und eingerichtet, einen vorbestimmten Temperatursensor (in sich, insbesondere etwa formschlüssig) aufzunehmen. Das Halteelement besteht aus mindestens einem komprimierbaren Dämmstoff.

Dabei kann das Halteelement das Volumen der Öffnung vollständig ausfüllen, um Wärmebrücken zu verhindern. Die Verbindung von dem Halteelement und der Öffnung kann insbesondere eine Presspassung sein, also das Halteelement gegenüber der Öffnung geringfügig größer ausgebildet sein, wodurch ein Anpressdruck zwischen Halteelement und Öffnung auftritt und insbesondere eine dichtende Verbindung von Halteelement und Isolation geschaffen werden kann bzw. geschaffen ist. Gleichzeitig kann vorteilhaft ein sichererer Halt des Halteelements in der Öffnung bewirkt und ein Herausfallen des Haltelements aus der Öffnung verhindert werden.

Dabei kann die Befestigungsanordnung das Halteelement sowie ein Aufnahmeelement für das Halteelement umfassen. Dabei kann das Halteelement in eine erste Öffnung des Aufnahmeelementes und das Aufnahmeelement in eine zweite Öffnung der Isolation eingebracht sein oder werden. Das Aufnahmeelement kann dabei aus dem gleichen Material wie das Halteelement bestehen und formschlüssig und/ oder kraftschlüssig in die zweite Öffnung in der Isolation eingebracht werden. Zur Vermeidung von Wärmebrücken kann auch das Aufnahmeelement mit einer Presspassung in die zweite Öffnung der Isolation eingebracht sein. Optional kann das Aufnahmeelement auch in der zweiten Öffnung befestigt sein, beispielweise verklebt. Erste und zweite Öffnung können dabei insbesondere kreisrund ausgeführt sein.

Das Aufnahmeelement kann auch eine Zylinderform aufweisen, insbesondere mit einer kreisrunden Grundfläche, wobei eine dem Speicherbehälter zugewandte Grundfläche als erste Stirnseite des Aufnahmeelementes und eine dem Speicherbehälter abgewandte Grundfläche als zweite Stirnfläche des Aufnahmeelementes bezeichnet werden kann. Die Mantelfläche der Zylinderform kann dabei weitestgehend vollständig in direktem Kontakt mit der Isolation gebracht sein, um Wärmebrücken und Hohlräume zwischen Aufnahmeelement und thermischer Isolation zu vermeiden und damit die Energieeffizienz des Wärmespeichers zu steigern. Auch bei dem Aufnahmeelement kann der Abstand zwischen erster und zweiter Stirnseite der Dicke der Isolation entsprechen. Im eingebauten Zustand liegt somit die erste Stirnfläche am Speicherbehälter an und die zweite Grundfläche kann bündig mit der äußeren Oberfläche der Isolation ausgerichtet sein.

Die Öffnung und das Halteelement können beispielsweise eine Zylinderform aufweisen, wobei die Grundfläche des Zylinders von der Oberfläche des Speicherbehälters und der der äußeren Oberfläche der Isolation gebildet werden. Die Grundfläche der Zylinderform kann beispielsweise kreisrund sein. Dabei kann die dem Speicherbehälter zugewandte Grundfläche des Halteelements als erste Stirnseite und die dem Speicherbehälter abgewandte Grundfläche als zweite Stirnseite bezeichnet werden. Der Abstand zwischen erster Stirnseite und zweiter Stirnseite kann dabei der Dicke der Isolation entsprechen, so dass das Halteelement bündig in die Oberfläche der Isolation integrierbar und mit dem Speicherbehälter in Anlage bringbar ist.

Bei einer Isolation umfassend ein Dämmmaterial, das als Schüttgut vorliegt, kann z.B. eine Öffnung für das Halteelement in der Schale der Isolation eingebracht werden. Dabei kann insbesondere die Öffnung derart ausgebildet sein, dass die Schale die Mantelflächen der Öffnung bedeckt und somit Schüttgut nicht durch die Öffnung austreten kann.

An bzw. in dem Haltelement kann eine Aufnahme für den Temperatursensor angeordnet sein. Die Aufnahme kann eine integrierte Fixierung des Temperatursensors bzw. eines Messfühlers desselben mit einer vorgegebenen Messposition zum bzw. am Speicherbehälter und damit eine exakte Temperaturmessung sicherstellen. Die Aufnahme kann beispielsweise eine Nut sein, in die der Temperatursensor einbringbar ist, beispielsweise mittels einer Klemm- oder Clipverbindung. Der Temperatursensor kann selbstverständlich mit beliebigen anderen Verbindungsmethoden oder -mitteln am Halteelement befestigt werden, beispielsweise mittels Kleben. Ein Kabel einer elektrischen Verbindung zu dem Temperatursensor kann dabei durch das Halteelement geführt sein oder in einer einfachen Ausgestaltung durch den Verbindungsbereich von Öffnung (bzw. Isolation) und Haltelement geführt sein.

Der Temperatursensor ist mit dem Speicherbehälter thermisch gekoppelt bzw. (direkt oder indirekt) in wärmeleitenden Kontakt, so dass ein Wärmeübergangskoeffizient unterhalb eines vorgegebenen Grenzwertes zwischen Speicherbehälter und Temperatursensor eingestellt ist. Gemäß einer Ausgestaltung kann zwischen Temperatursensor und dem Speicherbehälter ein wärmeleitendes Kontaktmaterial angeordnet sein, beispielsweise eine Wärmeleitpaste. Das wärmeleitende Kontaktmaterial kann dabei insbesondere in direktem Kontakt mit dem Temperatursensor und dem Speicherbehälter sein.

Das Halteelement kann auch zur Aufnahme weiterer Bauteile eingerichtet sein. Bei dem weiteren Bauteil kann es sich beispielsweise um eine Anzeigeeinheit handeln, die die aktuell gemessene Temperatur des Temperatursensors anzeigt. Bei der Anzeigeeinheit kann es sich beispielsweise um eine LCD-Anzeigeeinheit handeln, die in der Umgebung des Halteelementes angeordnet sein kann.

Auf der von außen zugänglichen Seite des Halteelementes kann ein Griff angeordnet sein, der ein Herausziehen des Halteelementes vereinfacht. Vorteilhaft kann so eine Revision oder auch ein Austausch des Temperatursensors auf besonders einfache Weise erfolgen. Bei dem Griff kann es sich um eine beliebige Einrichtung handeln, die ein Aufbringen einer Zugkraft auf das Halteelement erleichtert, somit auch um eine Mulde oder ähnliches.

Das Halteelement ist mehrteilig ausgebildet und umfasst ein innenliegendes Kernelement und ein außenliegendes Mantelelement. An oder in dem Kernelement ist der Temperatursensor angeordnet bzw. befestigt. Das Kernelement ist formschlüssig und/ oder kraftschlüssig in dem Mantelelement angeordnet bzw. anordnenbar. Das Mantelelement ist in die Öffnung in der Isolation kraftschlüssig und/ oder formschlüssig eingebracht. Dabei kann das Mantelelement auch mit der Speicherwand und/ oder der thermischen Isolation stoffschlüssig verbunden werden bzw. sein, beispielsweise mittels Kleben.

Gemäß einer Ausgestaltung können Kernelement und Halteelement, teilweise oder vollständig, aus dem gleichen Material bestehen.

Kernelement und Mantelelement können auch eine äußere Zylinderform aufweisen, insbesondere mit einer kreisrunden Grundfläche. Dabei kann eine, dem Speicherbehälter zugewandte, Grundfläche von Kernelement und/ oder Mantelelement als erste Stirnseite und eine dem Speicherbehälter abgewandte Grundfläche als zweite Stirnfläche von Kernelement und/ oder Mantelelement bezeichnet werden kann. Eine in Umfangsrichtung ausgerichtete und erste und zweite Stirnfläche verbindende Mantelfläche des Mantelelementes kann dabei weitestgehend vollständig in direktem Kontakt mit der thermischen Isolation gebracht sein, um Wärmebrücken und Hohlräume zwischen Mantelelement und thermischer Isolation zu vermeiden und damit die Energieeffizienz des Wärmespeichers zu steigern. Auch kann die Mantelfläche des Kernelementes weitestgehend vollständig in Kontakt mit dem Mantelelement sein. Auch bei dem Mantelelement und/ oder dem Kernelement kann der Abstand zwischen erster und zweiter Stirnseite der Dicke der thermischen Isolation entsprechen. Im eingebauten Zustand liegt somit die erste Stirnfläche von Kernelement und/ oder Mantelelement am Speicherbehälter an und die zweite Grundfläche kann bündig mit der äußeren Oberfläche der Isolation ausgerichtet sein.

Die Ausgestaltung mit einem mehrteilig ausgebildeten Halteelement kann insbesondere bei einer thermischen Isolation umfassend ein Schüttgut hilfreich sein, da das Aufnahmeelement ein Austreten des als Schüttgut vorliegenden Dämmmaterials aus der Kavität verhindern kann. In jedem Fall kann ein Aufnahmeelement einen sicheren Halt des Halteelementes gewährleisten, indem das Aufnahmeelement ein hierfür geeignetes Material aufweist. Die Größe des Kernelementes und/ oder des Mantelelementes kann dabei auch im Hinblick auf einen sicheren Halt desselben in der umgebenden thermischen Isolation bzw. dem umgebenden Mantelelement gewählt werden.

Es versteht sich, dass der Wärmespeicher eine Vielzahl von mittels eines Halteelementes in die Isolation eingebrachter Temperatursensoren umfassen kann. Diese können insbesondere im Einbauzustand über die Höhe des Wärmespeichers verteilt sein, um die Temperatur unterschiedlicher Höhenschichten des im Speicherbehälter enthaltenen Wärmeträgers erfassen.

Einem weiteren Aspekt der Erfindung folgend wird auch ein Verfahren zur Montage eines Temperatursensors an einem Wärmespeicher mit einem Speicherbehälter und einer diesen umgebenden thermischen Isolation vorgeschlagen. Die Montage erfolgt mittels eines Halteelementes, umfassend ein Kernelement und ein Mantelelement. Das Verfahren umfasst zumindest die folgenden Schritte:
a) Einbringen des Mantelelementes in eine Öffnung der thermischen Isolation mittels einer formschlüssigen und oder kraftschlüssigen Verbindung,
b) Anordnen des Temperatursensors an oder in dem Kernelement,
c) Einbringen des Kernelementes in das Mantelelement, so dass eine formschlüssige und/ oder kraftschlüssige Verbindung entsteht und der Temperatursensor in thermischem Kontakt mit dem Speicherbehälter ist.

Die Schritte a), b) und c) des Verfahrens können bei einer regulären Verfahrensdurchführung einmal in der angegebenen durchgeführt werden. Dabei können die Schritte a) und b) jedoch auch, zumindest teilweise, zeitgleich oder in beliebiger Reihenfolge nacheinander ausgeführt werden. Das Verfahren dient einem einfachen Einbringen eines Temperatursensors an eine vorgesehene Position an einem Wärmespeicher.

Gemäß einem Schritt a) wird ein Mantelelement des Halteelementes in die thermische Isolation eingebracht. Das Einbringen erfolgt dabei in eine Öffnung in der Isolation, deren Größe insbesondere der Größe des Halteelementes entspricht, oder geringfügig kleiner ist, um eine Verbindung einer Presspassung zwischen Halteelement und thermischer Isolation zu bewirken, die keine Wärmebrücken aufweist.

Gemäß einer Ausgestaltung kann im Vorfeld der Durchführung des Schrittes a) ein Schritt 0) durchgeführt werden, bei dem die thermische Isolation des Speicherbehälters an einem vorgesehenen Einbauort des Temperatursensors entfernt wird, so dass die Öffnung entsteht, in die das Mantelelement weitestgehend spaltfrei einbringbar ist.

Gemäß einem Schritt b) erfolgt ein Anordnen des Temperatursensors an dem Kernelement. Das Anordnen kann dabei ein Befestigen des Temperatursensors am Kernelement einschließen, beispielsweise mit einer formschlüssigen Verbindung.

Gemäß einem Schritt c) erfolgt ein Einbringen des Kernelements in das Mantelelement, so dass der Temperatursensor in thermischem Kontakt mit dem Speicherbehälter ist. Der Schritt c) wird insbesondere nach der Durchführung des Schrittes a) durchgeführt, so dass das Mantelelement bei der Durchführung des Schrittes c) bereits in die thermische Isolation eingebracht ist. Auch bei der Durchführung des Schrittes c) wird bevorzugt eine Presspassung zwischen Kernelement und Mantelelement hergestellt, so dass keine oder nur geringste Wärmebrücken im Verbindungsbereich von Kernelement und Mantelelement entstehen können.

Gemäß einer Ausgestaltung, bei der die thermische Isolation als in einer Kavität anzuordnendes Schüttgut ausgeführt ist, kann der Schritt a) vor dem Einbringen des Schüttgutes in die Kavität erfolgen. Vorteilhaft kann so ein Austreten von Schüttgut aus der Kavität verhindert werden.

Gemäß einer Ausgestaltung kann vor der Durchführung des Schrittes c), beispielsweise im Rahmen der Durchführung des Schrittes b) ein wärmeleitendes Kontaktmaterial am Temperatursensor und/ oder am Speicherbehälter aufgebracht werden, so dass dieses in Kontakt mit Temperatursensor und Speicherbehälter nach Durchführung des Verfahrens ist.

Die im Zusammenhang mit dem Wärmespeicher erörterten Details, Merkmale und vorteilhaften Ausgestaltungen können entsprechend auch bei dem hier vorgestellten Verfahren auftreten und umgekehrt. Insoweit wird auf die dortigen Ausführungen zur näheren Charakterisierung der Merkmale vollumfänglich Bezug genommen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Hier werden somit ein Wärmespeicher sowie ein Verfahren zur Montage eines Temperatursensors an einem Wärmespeicher angegeben, welche die mit Bezug auf den Stand der Technik geschilderten Probleme zumindest teilweise lösen. Insbesondere tragen der Wärmespeicher und das Verfahren zumindest dazu bei, eine Anordnung eines Temperatursensors zu, Erfassen einer Temperatur des, im Wärmespeicher enthaltenen Wärmeträgers, auf besonders einfache Weise zu ermöglichen. Zudem werden durch das Verfahren keine Wärmebrücken in die Isolation des Wärmespeichers eingebracht, so dass der Wärmespeicher eine sehr gute Energieeffizienz aufweist. Nicht zuletzt ermöglicht die Erfindung eine Revision des Temperatursensors oder auch einen Austausch desselben auf eine besonders einfache und schnelle Art und Weise.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Schnittdarstellung eines hier vorgeschlagenen Wärmespeichers,
- Fig. 2:: eine Darstellung eines Teilbereichs der Isolation des Wärmespeichers,
- Fig. 3:: ein Halteelement, und
- Fig. 4:: eine weitere Darstellung des Halteelements.

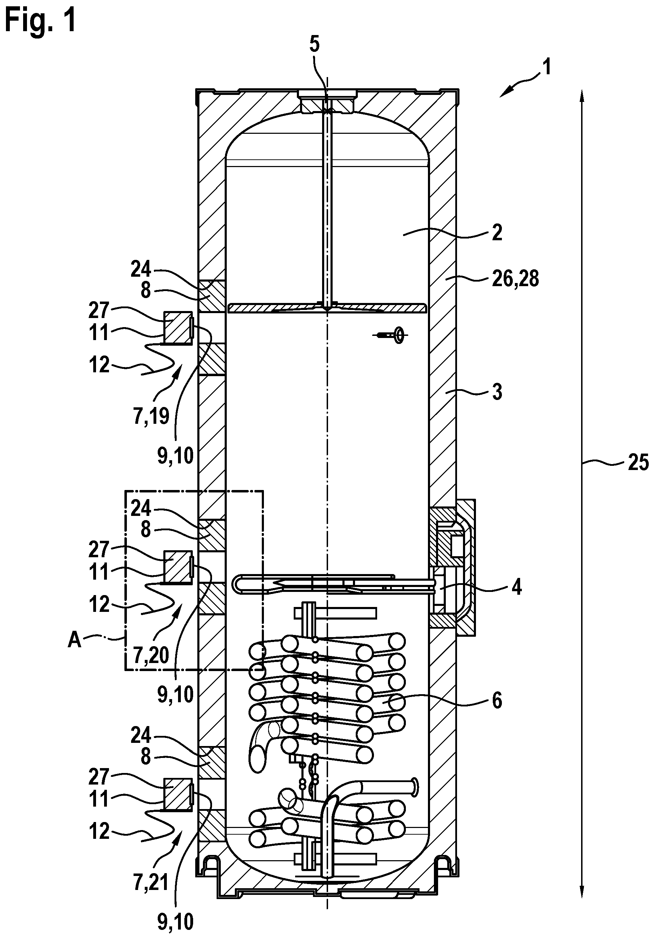

Fig. 1 zeigt beispielhaft und schematisch einen hier vorgeschlagenen Wärmespeicher 1. Dieser kann einen Speicherbehälter 2 aufweisen, der von einer thermischen Isolation 3 umschlossen wird. Die thermische Isolation 3 ist hier als Schüttgut 26 ausgebildet, das in einer Kavität 28 angeordnet ist. Der Speicherbehälter 2 kann mit einer Zylinderform mit einer kreisrunden Grundfläche ausgebildet sein. Der Wärmespeicher 1 kann einen Zulauf 4 und einen Auslauf 5 für eine aufzunehmende Flüssigkeit umfassen. Der in Fig. 1 gezeigte Wärmespeicher 1 ist ein Warmwasserspeicher, bei dem der Zulauf 4 ein Kaltwasserzulauf und der Auslauf 5 ein Warmwasserauslauf sein kann. Zudem kann der Wärmespeicher 1 einen Wärmetauscher 6 aufweisen, der als Rohrschlange im Speicherbehälter 2 ausgebildet sein kann und Wärmeenergie in den Speicherbehälter 2, bzw. einen darin enthaltenen Wärmeträger, eintragen oder austragen kann.

An dem Wärmespeicher 1 sind in Öffnungen 24 der Isolation 3 drei Temperatursensoren 9 über die Höhe 25 des Speicherbehälters 2 verteilt angeordnet. So ist ein erste Anordnung 19 eines Temperatursensors 9 in einem (geodätisch) oberen Bereich des Speicherbehälters 2, eine zweite Anordnung 20 eines Temperatursensors 9 in einem mittleren Bereich und eine dritte Anordnung 21 eines Temperatursensors 9 in einem unteren Bereich des Speicherbehälters 2 montiert.

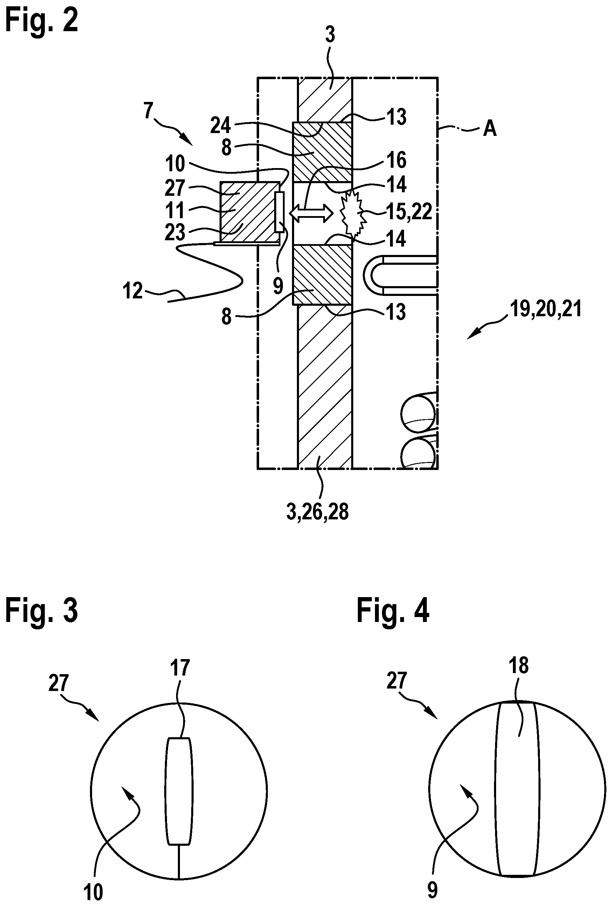

Der Bereich A einer Anordnung 19, 20, 21 der Fig. 1 ist in Fig. 2 näher dargestellt. Die Anordnung 19, 20, 21 umfasst ein Halteelement 7, dass mehrteilig aufgebaut ist, umfassend ein Mantelelement 8, das mittels einer ersten Presspassung 13 in der Isolation 3 befestigt ist, und ein Kernelement 27, dass mittels einer zweiten Presspassung 14 in dem Mantelelement 8 angeordnet ist. Hierfür weist die Isolation 3 eine Öffnung 24 zur Aufnahme des Mantelelements 8 auf. Das Kernelement 27 weist eine erste, dem Speicherbehälter 2 zugewandte, Stirnseite 10 und eine zweite, dem Speicherbehälter 2 abgewandte Stirnseite 11 auf. Eine Mantelfläche 23 des Kernelementes 27 ist dabei im eingebrachten Zustand des Kernelementes 27 in das Mantelelement 8 weitestgehend vollständig in Kontakt mit dem Mantelelement 8, wodurch Wärmebrücken weitestgehend vollständig vermieden werden können. An der ersten Stirnseite 10 ist eine Aufnahme 17 zur Herstellung einer zumindest teilweise formschlüssigen Verbindung mit dem Temperatursensor 9 vorgesehen, wobei die Aufnahme 17 in der Fig. 3 näher dargestellt ist, und hier in einer Mulde zur Aufnahme des Temperatursensors 9 besteht. An der zweiten Stirnseite 11, die im eingesetzten Zustand des Kernelementes 7 von außen zugänglich ist, kann ein Griff 18 angeordnet sein, der ein Einsetzen und Entfernen des Kernelementes 27 aus oder in das Mantelelement 8 erleichtert und in Fig. 4 näher dargestellt ist.

Der Temperatursensor 9 umfasst ein Kabel 12, das durch die Schnittstelle von Kernelement 27 und Mantelelement 8, also zwischen Mantelfläche 23 des Kernelementes 27 und dem Mantelelement 8 nach außen geführt ist und beispielsweise mit einem Regel- und Steuergerät einer den Wärmespeicher 1 umfassenden Heizungsanlage elektrisch verbunden ist. Das Kernelement 27 kann in einer Bewegungsrichtung 16 in das Mantelelement 8 verbracht und aus diesem entnommen werden. In dem Zustand, in dem das Kernelement 27 in das Mantelelement 8 eingesetzt ist, bildet der Temperatursensor 9 einen Kontaktbereich 22 mit dem Speicherbehälter 2. In dem Kontaktbereich 22 kann Wärmeleitpaste 15 eingebracht sein, die eine hervorragende thermische Kopplung zwischen Temperatursensor 9 und Speicherbehälter 2 sicherstellt und damit auch exakte Temperaturmessungen ermöglicht.

Bei einem hier vorgestellten Verfahren kann bei einem optionalen Schritt 0) eine Öffnung für das Aufnahmeelement 8 in die thermische Isolation 3 des Wärmespeichers 1 eingebracht werden. Falls die Öffnung bereits im Rahmen der Herstellung der thermischen Isolation 3 bereitgestellt wurde, kann der Schritt 0) entfallen.

Gemäß einem Schritt a) kann ein Einbringen eines Aufnahmeelementes 8 in die thermische Isolation 3 erfolgen. Hierzu kann das Aufnahmeelement 8 leicht komprimiert und in die Öffnung eingebracht werden, wo das Aufnahmeelement 8 wieder expandiert und so die erste Presspassung 13 bewirkt. Das Einbringen des Aufnahmeelementes 8 in die Isolation 3 kann dabei in der Bewegungsrichtung 16 des Kernelementes 27 erfolgen.

Gemäß einem Schritt b) kann der Temperatursensor 9 am Kernelement 27 angeordnet werden. Dazu kann der Temperatursensor 9 beispielsweise in eine Aufnahme 17 an der ersten Stirnseite 10 des Kernelementes 27 eingebracht werden.

Die Schritte a) und b) können zumindest teilweise zeitgleich oder auch beliebig nacheinander ausgeführt werden.

Gemäß einem Schritt c) kann ein Einbringen des Kernelementes 27 in das Mantelelement 8 erfolgen, so dass der Temperatursensor 9 in thermischem Kontakt mit dem Speicherbehälter 2 ist. Hierzu kann das Kernelement 27 in der Bewegungsrichtung 16 in das Mantelelement 8 eingebracht werden. Auch das Kernelement 27 kann hierzu (geringfügig) komprimiert werden, um ein Einbringen in das Mantelelement 8 zu erleichtern. Durch ein Expandieren des Kernelementes 27 nach dem Einbringen bildet sich die zweite Presspassung 14 aus. Im Ergebnis ist der Temperatursensor 9 in dem Kontaktbereich 22 in thermischen bzw. direkten Kontakt mit dem Speicherbehälter 2, und eine exakte Temperaturmessung ermöglicht. Gegebenenfalls kann im Kontaktbereich 22 Wärmeleitpaste 15 die thermische Kopplung von Temperatursensor 9 und Speicherbehälter 2 noch steigern.

### Bezugszeichenliste

- 1: Wärmespeicher
- 2: Speicherbehälter
- 3: Isolation
- 4: Zulauf
- 5: Auslauf
- 6: Wärmetauscher
- 7: Halteelement
- 8: Mantelelement
- 9: Temperatursensor
- 10: erste Stirnseite
- 11: zweite Stirnseite
- 12: Kabel
- 13: erste Presspassung
- 14: zweite Presspassung
- 15: Wärmeleitpaste
- 16: Ein- und Ausbringrichtung
- 17: Aufnahme
- 18: Griff
- 19: erste Anordnung Temperatursensor
- 20: zweite Anordnung Temperatursensor
- 21: dritte Anordnung Temperatursensor
- 22: Kontaktbereich
- 23: Mantelfläche
- 24: Öffnung
- 25: Höhe
- 26: Schüttgut
- 27: Kernelement
- 28: Kavität

## Patentansprüche

1. Wärmespeicher (1), zumindest umfassend einen Speicherbehälter (2) zur Aufnahme eines Wärmeträgers und eine thermische Isolation (3) des Speicherbehälters (2), wobei die thermische Isolation (3) mindestens eine Öffnung (24) aufweist, in die formschlüssig oder kraftschlüssig ein Halteelement (7) aus einem komprimierbaren Dämmmaterial einbringbar oder eingebracht ist und an oder in dem Halteelement (7) ein Temperatursensor (9) anordenbar oder angeordnet ist, der mit dem Speicherbehälter (2) thermisch koppelbar oder gekoppelt ist und das Halteelement (7) mehrteilig ausgebildet ist und ein außenliegendes Mantelelement (8) und ein innenliegendes Kernelement (27) umfasst, wobei an oder in dem Kernelement (7) der Temperatursensor (9) angeordnet ist und das Kernelement (27) formschlüssig oder kraftschlüssig in dem Mantelelement (8) angeordnet ist und das Mantelelement (8) formschlüssig oder kraftschlüssig in der Öffnung (24) angeordnet oder anordenbar ist.

2. Wärmespeicher (1) nach Anspruch 1, wobei der Speicherbehälter (2) bezogen auf einen Einbauzustand eine Höhe (25) umfasst und mehrere Haltelemente (7) mit jeweils einem Temperatursensor (9) in mehreren Öffnungen (24) über die Höhe (25) des Speicherbehälters (2) verteilt angeordnet sind.

3. Wärmespeicher (1) nach einem der vorangehenden Ansprüche, wobei das Mantelelement (8) mit der thermischen Isolation (3) oder dem Speicherbehälter (2) verklebt ist.

4. Wärmespeicher (1) nach einem der vorangehenden Ansprüche, wobei das Kernelement (27) eine Zylinderform mit einer ersten Stirnseite (10), einer zweiten Stirnseite (11) und einer Mantelfläche (23) aufweist, und das Mantelelement (8) die Mantelfläche (23) des Halteelementes (7) weitestgehend vollständig kontaktiert.

5. Wärmespeicher (1) nach einem der vorangehenden Ansprüche, wobei das Halteelement eine erste Stirnseite (10) aufweist, die dem Speicherbehälter (2) zugewandt ist und eine Aufnahme (17) für den Temperatursensor (9) aufweist oder eine zweite Stirnseite (11) aufweist, die dem Speicherbehälter (2) abgewandt ist und einen Griff (18) umfasst.

6. Wärmespeicher (1) nach einem der Ansprüche 4 oder 5, wobei das Halteelement (7) zumindest teilweise aus Polypropylen (EPP) besteht, insbesondere aus expandiertem Polypropylen (EPP).

7. Wärmespeicher (1) nach einem der vorangehenden Ansprüche, wobei die thermische Isolation (3) Schüttgut (26) in einer Kavität (28) umfasst.

8. Wärmespeicher (1) nach einem der vorangehenden Ansprüche, wobei zwischen Temperatursensor (9) und dem Speicherbehälter (2) ein wärmeleitendes Kontaktmaterial (15) angeordnet ist.

9. Verfahren zur Montage eines Temperatursensors (9) an einem Wärmespeicher (1) mit einem Speicherbehälter (2) und einer diesen umgebenden thermischen Isolation (3) mittels eines Halteelementes (7), umfassend ein Kernelement (27) und ein Mantelelement (8) umfassend zumindest die folgenden Schritte:
a) Einbringen des Mantelelementes (8) in eine Öffnung (24) der thermischen Isolation (3),
b) Anordnen des Temperatursensors (9) an dem Kernelement (27),
c) Einbringen des Kernelementes (7) in das Mantelelement (8), so dass eine formschlüssige und/ oder kraftschlüssige Verbindung entsteht und der Temperatursensor (9) in thermischem Kontakt mit dem Speicherbehälter (2) ist.

10. Verfahren nach Anspruch 9, wobei in einem Schritt 0), der dem Schritt a) vorgelagert ist, die thermische Isolation (3) des Speicherbehälters (2) an einem vorgesehenen Einbauort des Temperatursensors (9) entfernt und eine Öffnung (24) ausgebildet wird, so dass das Aufnahmeelement (8) spaltfrei einbringbar ist.

11. Verfahren nach Anspruch 9, wobei die thermische Isolation (3) des Wärmespeichers (1) als in einer Kavität (28) angeordnetes Schüttgut (26) ausgebildet ist und die Durchführung des Schrittes a) vor dem Einbringen des Schüttgutes (26) in die Kavität (28) erfolgt.

12. Verfahren nach einem der Ansprüche 9 bis 11, wobei an dem Temperatursensor (9) und/ oder an dem Speicherbehälter (2) im Rahmen der Durchführung des Schrittes b) oder Schrittes c) ein wärmeleitendes Kontaktmaterial (15) angebracht wird.
